# EUROPÄISCHE PATENTSCHRIFT

(11) **EP 0 587 074 B1**
(45) Veröffentlichungstag und Bekanntmachung des Hinweises auf die Patenterteilung: **02.04.1997**
(21) Anmeldenummer: 93114191.5
(22) Anmeldetag: 04.09.1993
(51) Int. Cl.: B01D 53/92, B01J 35/04, F01N 3/28, B01F 5/06

(54) **Vorrichtung zum Mischen und Verwirbeln von Gasen und Flüssigkeiten, insbes. als Träger der Katalysatorelemente von Kraftfahrzeugen**
Device for mixing and swirling gases and liquids, especially for carriers for catalysts of motor vehicles
Dispositif pour mélanger et tourbillonner des gaz et des liquides, en particulier pour des supports des catalyseurs d'automobiles

(30) Priorität: 08.09.1992 FR 9210831
(43) Veröffentlichungstag der Anmeldung: 16.03.1994
(73) Patentinhaber: SOTRALENTZ S.A., F-67320 Drulingen (FR)
(72) Erfinder: Freund, Jean-Pierre, F-67000 Strasbourg (FR)
(74) Vertreter: Honke, Manfred, Dr.-Ing.

(56) Entgegenhaltungen:
- EP-A- 0 152 560
- EP-A- 0 186 801
- DE-A- 3 817 490
- DE-A- 3 844 350

## Beschreibung

Die Erfindung betrifft eine Vorrichtung zum Mischen und Verwirbeln von Gasen und Flüssigkeiten, insbesondere als Träger der Katalysatorelemente von Kraftfahrzeugen, die aus einer Mehrzahl von superponierten Blechtafeln aufgebaut ist, die turbulenzerzeugende Ausformungen aufweisen, wobei die Blechtafeln im wesentlichen gleich ausgeführt sind und die einzelnen Tafeln aufweisen:
a) in quer zur Strömungsrichtung der fluiden Medien verlaufenden Reihen angeordnete, im wesentlichen gleiche Brückenausformungen sowie zwischen den Brückenausformungen angeordnete Rinnenausformungen, die so angeordnet sind, daß die Rinnenböden der Rinnenausformungen in einer ersten Reihe mit den Brückendecken der Brückenausformungen in einer zweiten Reihe in einer Ebene liegen, - undsoweiterfort reihenweise in abwechselnder Folge,
b) offene Stirnseiten an den Brückenausformungen sowie an den Rinnenausformungen,
wobei die superponierten Blechtafeln in bezug auf die Brückenausformungen sowie in bezug auf die Rinnenausformungen in der Draufsicht deckungsgleich und/oder versetzt angeordnet sind. - Eine solche Vorrichtung kann allgemein eingesetzt werden, wenn beim Durchfließen fluider Medien eine Homogenisierung durch Mischung und/oder Verwirbelung erreicht werden soll. Wird die Vorrichtung für Katalysatoren von Kraftfahrzeugen eingesetzt, so dient sie als Träger der Katalysatorelemente für die Behandlung von Abgasen aus Automotoren bzw. für die Durchführung der entsprechenden katalytischen Umwandlungsreaktionen. Diese katalytischen Umwandlungsreaktionen bestehen darin, Produkte wie Kohlenmonoxid CO, Stickoxide NOₓ oder Kohlenwasserstoffbrennstoffrückstände CₘHₙ, die in den Abgasen der Motoren enthalten sind, in für die Umwelt weniger schädliche Gase umzuwandeln. Eine solche Reaktion wird bei einer geeigneten Temperatur eingeleitet, wobei zum Beispiel das Kohlenmonoxid und Sauerstoff, die in dem zu behandelnden Gas enthalten sind, gleichzeitig mit einem Katalysator, zum Beispiel mit auf die Oberflächen der obengenannten Vorrichtung aufgebrachtem Platin in Kontakt gebracht werden. Die Vorrichtung ist dann im allgemeinen in einem katalytischen Auspufftopf integriert. Zur Erhöhung der katalytischen Aktivität ist es einerseits erforderlich, daß die fluiden Komponenten des Abgases beim Durchqueren der Vorrichtung möglichst bald an den Oberflächen der Vorrichtung entlangstreichen und andererseits, daß die Temperatur der Vorrichtung in einem bestimmten Bereich bleibt. Beim Erreichen der unteren Grenze dieses Temperaturbereiches beginnt die katalytische Aktivität, während beim Erreichen der oberen Grenze dieses Temperaturbereiches der Abbau der Katalysatoren beginnt.

Bei der bekannten Vorrichtung, von der die Erfindung ausgeht (DE-A-38 44 350), werden bei einer ersten Ausführungsform im wesentlichen gleich ausgeführte Blechtafeln superponiert, deren Brückenausformungen und Rinnenausformungen sich bezüglich ihrer Breite und bezüglich Ihrer Höhe nicht unterscheiden. Bei dieser Ausführungsform werden lediglich lange geradlinige Passagen für das fluide Medium geschaffen, in denen keine Strömungswiderstände vorhanden sind. Daher findet eine effektive Durchmischung und Verwirbelung der fluiden Medien beim Durchströmen dieser Ausführungsform der bekannten Vorrichtung nicht statt und läßt insofern die katalytische Aktivität stark zu wünschen übrig. Bei einer zweiten Ausführungsform dieser bekannten Vorrichtung werden zumindest zwei verschiedene Arten von Blechtafeln superponiert, die sich hinsichtlich der Breite und Höhe ihrer Brückenausformungen und Rinnenausformungen unterscheiden. Dadurch wird allerdings eine Vielzahl sehr enger Kanäle gebildet, die zu Druckverlusten in der Strömung beitragen. Entstehen in diesen engen Kanälen örtliche Überhitzungen, weil z. B. in die Kanäle gelangte Partikel von Brennstoffrückständen erneut zu brennen beginnen, so können diese durch die langsame Strömung nicht schnell genug wieder aufgelöst werden. Die örtlichen Überhitzungen können aber einen Abbau der Katalysatoren bewirken. Dadurch, daß zur Herstellung dieser Ausführungsform der Vorrichtung zumindest zwei verschiedene Arten von Blechtafeln mit Ausformungen unterschiedlichen Ausmaßes benötigt werden, ist die Herstellung relativ aufwendig. Diese Vorrichtung ist daher für eine industrielle Serienfertigung wenig geeignet.

Bei einer anderen bekannten Vorrichtung (EP-A-0 186 801), die eine Trägermatrix, insbesondere für einen katalytischen Reaktor zur Abgasreinigung umfaßt, werden gewellte Metallfolien superponiert. Dabei werden über die Länge der Trägermatrix durchgehende lange Strömungskanäle gebildet, die nur relativ wenige Strömungswiderstände aufweisen. Im übrigen werden die gewellten Metallfolien durch über die Länge der Trägermatrix durchgehende glatte Metallfolien voneinander distanziert. Die Strömungskanäle in den verschiedenen Schichten der Metallfolien stehen von Schicht zu Schicht nur über relativ kleine Öffnungen in der durchgehenden Metallfolie untereinander in Verbindung. Insgesamt wird keine effektive Verwirbelung und Durchmischung des strömenden fluiden Mediums erzielt, so daß auch die katalytische Aktivität bei dieser Vorrichtung stark zu wünschen übrig läßt. Durch den Einsatz der ausgedehnten und durchgehenden glatten Metallfolien ist die Herstellung dieser Vorrichtung auch sehr materialaufwendig. Auch aus der Praxis sind Vorrichtungen bekannt, die eine Bienenwabenstruktur besitzen. Sie werden entweder durch die Umwicklung von zwei Blechtafeln hergestellt, wobei die eine gewellt und die andere glatt ist, oder durch Extrusion von Keramikwerkstoffen. Mit dieser Herstellungsweise erhält man Vorrichtungen mit einer sehr großen Anzahl nebeneinandergereihter Kanäle mit einem Querschnitt in der Größenordnung eines Quadratmillimeters und einer Länge in der Größenordnung von 100 mm. Die Gase können in diesen Parallelröhren nur laminar strömen, wodurch die Wirksamkeit der Vorrichtung eingeschränkt wird. Außerdem führt diese Anordnung im allgemeinen in der Mitte der Vorrichtung zu höheren Temperaturen als in den übrigen Bereichen, die in dieser Zone bis zum Abbau der Katalysatoren führen können und gegebenenfalls sogar den Träger zerstören können.

Demgegenüber liegt der Erfindung das technische Problem zugrunde, eine Vorrichtung der eingangs genannten Art anzugeben, bei der eine möglichst vollständige Durchmischung und Verwirbelung der fluiden Medien erreicht wird und bei der im Einsatz in Verbindung mit Katalysatoren eine Erhöhung der katalytischen Aktivität sowie eine Einhaltung eines geeigneten konstanten Temperaturbereiches auf verhältnismäßig einfache Weise erreicht wird und die zugleich wenig aufwendig herstellbar ist und sich insbesondere für eine industrielle Serienfertigung eignet.

Zur Lösung dieses technischen Problems lehrt die Erfindung eine Vorrichtung der eingangs genannten Art, die dadurch gekennzeichnet ist, daß im Vergleich zur Brückenausformungsbreite schmale Rinnenausformungen ausgebildet sind, daß die superponierten Blechtafeln durch ausformungsfreie Distanzblechstreifen distanziert sind und daß die Breite der Distanzblechstreifen in Strömungsrichtung kleiner oder gleich der Länge der Brückenausformungen ist.

Im einzelnen bestehen im Rahmen der Erfindung mehrere Möglichkeiten der weiteren Ausbildung und Gestaltung. Nach einer bevorzugten Ausführungsform der Erfindung sind die Blechtafeln zu einem ebenen Strömungsapparat zusammengefaßt. Nach einer weiteren bevorzugten Ausführungsform der Erfindung sind die Blechtafeln zu Zylindern gebogen und Zylinder unterschiedlichen Durchmessers ineinandergesetzt sowie zu einem zylindrischen Strömungsapparat zusammengefaßt. Im Rahmen der Erfindung liegt auch eine Vorrichtung, bei der eine langgestreckte Blechtafel spiralförmig gewickelt und dadurch zu einem Spiralströmungsapparat geformt ist.

Eine innige Turbulenzverwirbelung der fluiden Medien wird dadurch erreicht, daß diese einerseits durch die offenen Stirnseiten der Brückenausformungen bzw. Rinnenausformungen und andererseits durch in Hauptströmungsrichtung sich erstreckende Spalten zwischen übereinander angeordneten Brückenausformungen bzw. Rinnenausformungen quer zur Hauptströmungsrichtung strömen können. Durch die erfindungsgemäße Superponierung der Blechtafeln wird eine Vielzahl von kleinen und kurzen Kanälen gebildet, die alle parallel verlaufen und im Falle zylindrischer Strömungsapparate oder Spiralströmungsapparate parallel zur Hauptwickelachse des Bleches angeordnet sind, wobei die Kanäle durch ihre quer zur Strömungsrichtung versetzte Anordnung und über die offenen Stirnseiten alle miteinander in Verbindung stehen. Diese Anordnung hat den Vorteil, daß die Strömung der fluiden Medien in der Vorrichtung ständig geteilt und wiederverbunden wird, was bei Vorrichtungen mit Bienenwabenstruktur und durchgehenden Kanälen, wie z. B. bei den schon erwähnten Vorrichtungen aus extrudierter Keramik, nicht der Fall ist. Dadurch, daß bei der erfindungsgemäßen Vorrichtung die Kanäle nur sehr kurz sind, kann sich der laminare Strömungszustand, der sich bei alleiniger Berücksichtigung des Kanalquerschnittes und der Strömungsdurchschnittsgeschwindigkeit in der Vorrichtung normalerweise einstellen müßte, nicht entwickeln. Vielmehr stellt sich eine Turbulenzströmung ein, die eine starke Verwirbelung der fluiden Medien auslöst und die folgenden Vorteile bedingt: Nach Einströmen der fluiden Gase und Flüssigkeiten in die Vorrichtung verteilt sich die Strömung sehr schnell auf den gesamten Querschnitt der Vorrichtung mit einer gleichmäßigen Geschwindigkeit. Die katalytische Aktivität ist viel höher als die bei den bekannten Vorrichtungen mit durchgehenden Kanälen, da sich die Strömung, die Turbulenzströmung auf die gesamte Vorrichtung auswirken kann. Wegen dieser hohen katalytischen Aktivität ist es nicht mehr erforderlich, so enge und zahlreiche Kanäle wie bei den bekannten Vorrichtungen vorzusehen. Einerseits wird dadurch der sich für die Strömung ergebende Druckverlust geringer. Andererseits wird erreicht, daß die Vorrichtung, bei der zudem eine geringere Metallmenge als bei den bekannten Vorrichtungen eingesetzt werden muß, einen geringeren Wärmeleitwiderstand als die bekannten Vorrichtungen besitzt, wodurch die Temperatur, bei der die katalytische Reaktion einsetzt, schneller erreicht werden kann. Außerdem weist die Vorrichtung einen hohen Widerstand gegen örtliche Überhitzungen auf, die entstehen, wenn beispielsweise Tröpfchen von Brennstoffrückständen in die Kanäle gelangen und erneut zu brennen beginnen. Die hohe Wärmeleitfähigkeit der metallischen Kanalwände einerseits und die vorstehend beschriebene Wirbelwirkung andererseits, die die schnelle Auflösung von in der Strömung brennenden Rückständen ermöglicht, verhindern, daß in der Vorrichtung eine hohe Temperatur erreicht wird, die den Katalysator zerstören könnte.

Im folgenden wird die Erfindung anhand einer lediglich ein Ausführungsbeispiel darstellenden Zeichnung ausführlicher erläutert. Es zeigen
- Fig. 1: eine perspektivische Ansicht einer Blechtafel mit Brückenausformungen und Rinnenausformungen,
- Fig. 2: eine perspektivische Ansicht zweier superponierter Blechtafeln mit Distanzblechstreifen,
- Fig. 3: einen Schnitt durch zwei superponierte Blechtafeln,
- Fig. 4: eine perspektivische Ansicht der erfindungsgemäßen Vorrichtung in der Ausführungsform eines Spiralströmungsapparates,
- Fig. 5: den Gegenstand nach Fig. 1, zur Verdeutlichung in einzelne, auseinandergezogene Blechstreifen zerlegt,
- Fig. 6: einen Blechstreifen nach Fig. 5 im Schnitt,
- Fig. 7: zwei aufeinanderfolgende Blechstreifen nach Fig. 1 bzw. Fig. 5 im Schnitt.

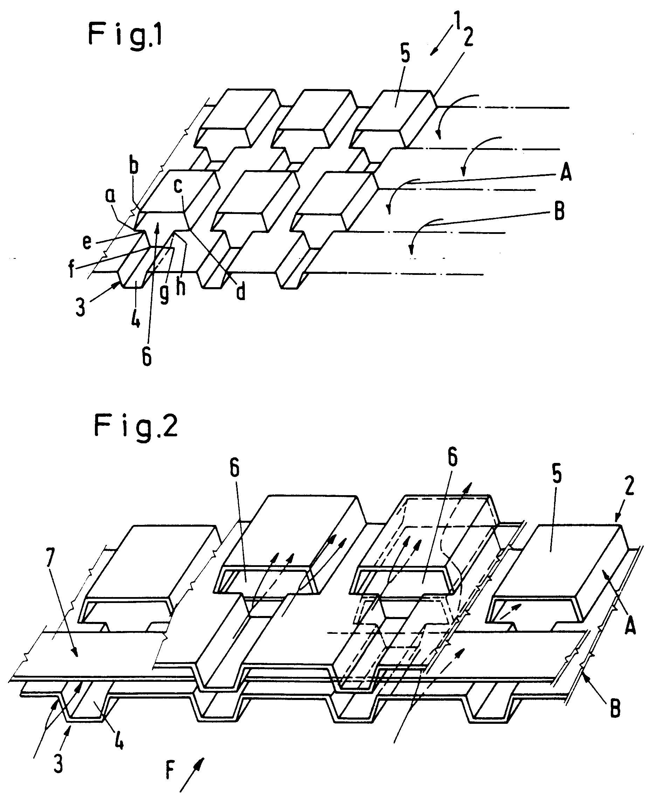

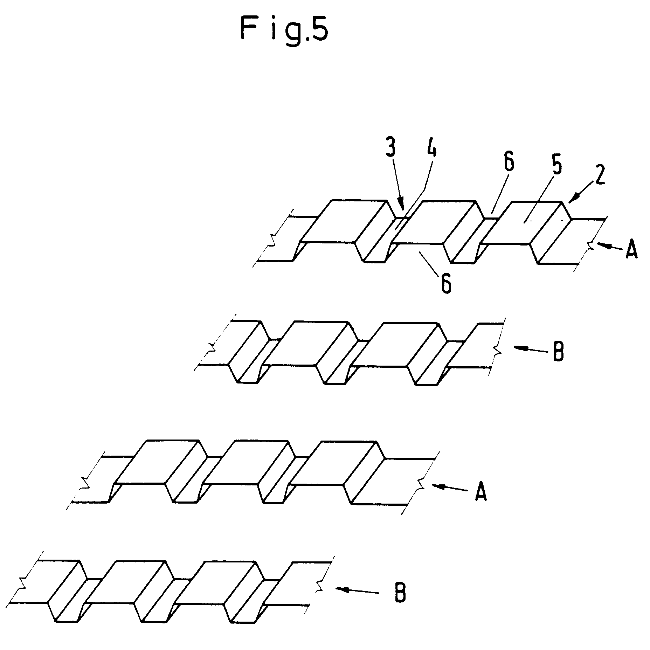

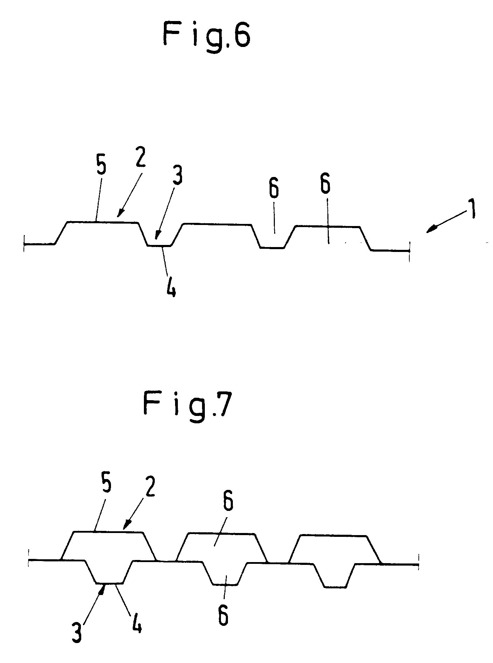

Die Fig. 1, 5, 6 und 7 verdeutlichen, daß eine Blechtafel 1 im Rahmen der erfindungsgemäßen Vorrichtung aus alternierenden Streifen zweier Typen A und B besteht. Die Blechstreifen A bzw. B weisen im wesentlichen gleiche Brückenausformungen 2 auf, die im Ausführungsbeispiel im Schnitt trapezförmig ausgebildet sind, und im Vergleich zur Brückenausformungsbreite schmale, im wesentlichen gleiche Rinnenausformungen 3, die im Ausführungsbeispiel im Schnitt ebenfalls trapezförmig ausgebildet sind. Die Blechstreifen vom Typ A bzw. B sind in quer zur Strömungsrichtung der fluiden Medien verlaufenden Reihen angeordnet und zwar so, daß die Rinnenböden 4 der Rinnenausformungen 3 des Blechstreifens vom Typ A mit den Brückendecken 5 der Brückenausformungen 2 der Blechstreifen des Typs B in einer Ebene liegen, undsoweiterfort reihenweise in abwechselnder Folge. Die Blechtafeln 1 weisen an den Brückenausformungen 2 und an den Rinnenausformungen 3 offene Stirnseiten auf. Die Länge des Profils, das in der Fig. 1 mit a, b, c und d gekennzeichnet ist, ist gleich der Länge des Profils, das in der Fig. 1 mit a, e, f, g, h und d gekennzeichnet ist, damit die Bildung der Ausformungen ohne Falte oder Riß erfolgen kann. Vorzugsweise und im Ausführungsbeispiel ist die Höhe der Brückenausformungen 2 gleich der Tiefe der Rinnenausformungen 3. Die erfindungsgemäße Blechtafel 1 ist mit einer Vielzahl von Öffnungen 6 an den Stirnseiten der Brückenausformungen 2 und der Rinnenausformungen 3 versehen, deren Querschnitt jeweils Trapezform hat, wobei die längeren Seiten der Trapeze von in Strömungsrichtung benachbarten Brückenausformungen 2 und Rinnenausformungen 3 aneinandergrenzen und die Mittelpunkte dieser Seiten dabei aufeinanderliegen.

In Fig. 2 sind zwei superponierte Blechtafeln 1 mit jeweils nur zwei aneinandergrenzenden Blechstreifen des Typs A und des Typs B dargestellt. Die Blechstreifen vom Typ A oder B liegen zweckmäßigerweise und im Ausführungsbeispiel auf Blechstreifen des gleichen Typs A bzw. B auf. Die beiden superponierten Blechtafeln 1 sind in der Fig. 2 in bezug auf die Brückenausformungen 2 sowie in bezug auf die Rinnenausformungen 3 in der Draufsicht deckungsgleich angeordnet. Um ein Einschieben der oberen Blechtafel 1 in die untere Blechtafel zu verhindern, ist zwischen den Blechstreifen des Typs B ein Distanzblechstreifen 7 aus vorzugsweise glattem Blech angeordnet. Zweckmäßigerweise und im Ausführungsbeispiel ist in Strömungsrichtung gesehen die Breite des Distanzblechstreifens 7 kleiner als die Länge der Brückenausformungen 2 bzw. Rinnenausformungen 3. Dieser Distanzblechstreifen 7 liegt auf Brückenausformungen 2 des Streifentyps B der unteren Blechtafel und Rinnenausformungen 3 des Streifentyps B der oberen Blechtafel liegen auf dem Distanzblechstreifen 7 auf. Da sowohl der Distanzblechstreifen 7 als auch die darauf aufliegenden Rinnenausformungen 3 in Strömungsrichtung F gesehen zwischen Brückenausformungen 2 der unteren Blechtafel eingeschoben sind, können sich die übereinanderliegenden Blechtafeln 1 in Strömungsrichtung nicht mehr gegeneinander verschieben. In der Fig. 2 wird die Hauptstromungsrichtung der fluiden Gase bzw. Flüssigkeiten durch den Pfeil F dargestellt, wobei sich die Strömung, die durch weitere Pfeile angedeutet ist, an den Kanten der Brückenausformungen 2 und Rinnenausformungen 3 ständig teilt und wieder verbindet. Auf diese Weise wird eine Wirbelströmung erzeugt.

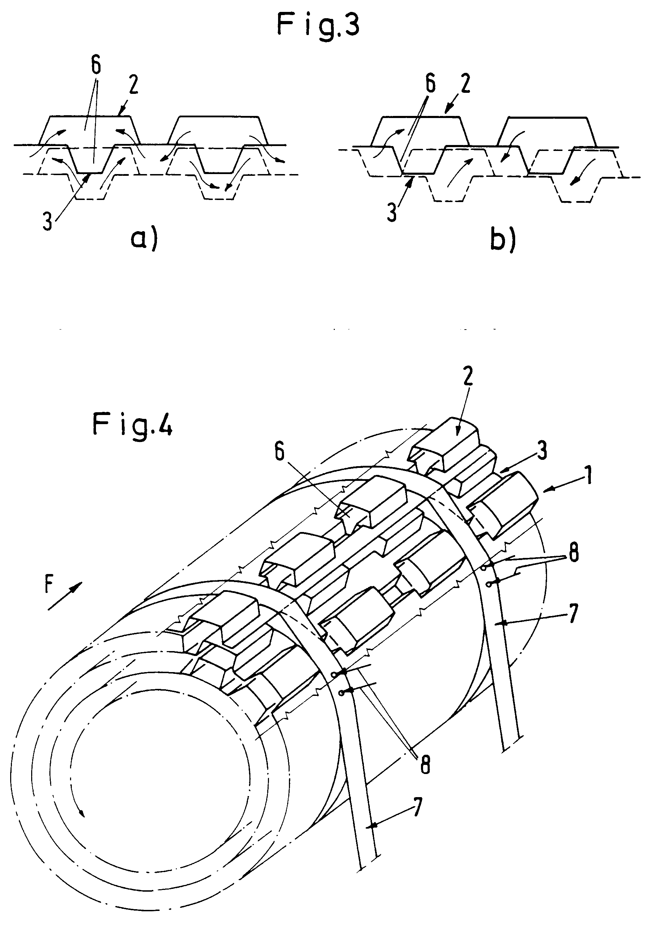

Die Fig. 3a zeigt den Gegenstand gemäß Fig. 2 ebenfalls im Schnitt, jedoch der Übersichtlichkeit halber ohne Distanzblechstreifen 7. Die eingezeichneten, einzelne Teilströmungen symbolisierenden Pfeile machen deutlich, daß das fluide Medium durch in Hauptströmungsrichtung sich erstreckende Spalten zwischen zwei übereinander angeordneten Brückenausformungen 2 oder zwei übereinander angeordnete Rinnenausformungen 3 zweier superponierter Blechtafeln 1 quer zur Hauptströmungsrichtung strömen kann. In der Fig. 3b ist eine andere Ausführungsform der Erfindung anhand von zwei superponierten Blechtafeln 1 dargestellt. In dieser Ausführungsform sind die superponierten Blechtafeln in bezug auf die Brückenausformungen 2 sowie in bezug auf die Rinnenausformungen 3 versetzt angeordnet. Die Pfeile in der Fig. 3b verdeutlichen, wie das strömende fluide Medium von einer Blechtafel zur anderen, d.h. senkrecht zur Hauptströmungsrichtung F fließen kann.

Die Fig. 4 zeigt eine Ausführungsform der erfindungsgemäßen Vorrichtung, bei der eine langgestreckte Blechtafel 1 mit einer großen Anzahl von Blechstreifen des Typs A und des Typs B und mit Hilfe von Distanzblechstreifen 7 spiralförmig gewickelt und dadurch zu einem Spiralströmungsapparat geformt ist. Auf diese Weise erhält man eine Vorrichtung, die sich besonders als katalytischer Reaktor für Kraftfahrzeuge eignet. Es versteht sich, daß bei der spiralförmigen Wicklung zumindest nicht kontinuierlich eine in der Draufsicht deckungsgleiche Anordnung in bezug auf die Brückenausformungen 2 sowie in bezug auf die Rinnenausformungen 3 erzielt werden kann, sondern daß diese mehr oder weniger gegeneinander versetzt angeordnet sind. Beim Abschluß der spiralförmigen Wicklung muß darauf geachtet werden, daß die Distanzblechstreifen 7 etwas über den Rand der Blechtafel 1 vorstehen, damit diese Distanzblechstreifen 7 beispielsweise an den Schweißpunkten 8 mit ihrem darunterliegenden, zur vorherigen Wickelschicht gehörenden Abschnitt verschweißbar sind. Diese Verbindung kann außer durch Schweißung auch durch Lötung, Falzung oder Klebung erfolgen. Der so hergestellte Spiralströmungsapparat besitzt eine relativ hohe Stabilität. Einerseits bilden die verschweißten Distanzblechstreifen 7 Ringe, die verhindern, daß sich die Blechtafel 1 entrollt. Andererseits verhindert das Ineinandergreifen der aufeinanderliegenden Blechtafeln bei der Aufwicklung eine schraubenförmige oder axiale Verschiebung einer Wickelschicht im Verhältnis zu einer anderen angrenzenden Wickelschicht. Dadurch weist der Spiralströmungsapparat einen hohen Widerstand gegen mechanische Beanspruchungen, insbes. gegen Vibrationen auf.

## Patentansprüche

1. Vorrichtung zum Mischen und Verwirbeln von Gasen und Flüssigkeiten, insbesondere als Träger der Katalysatorelemente von Kraftfahrzeugen , die aus einer Mehrzahl von superponierten Blechtafeln (1) aufgebaut ist, die turbulenzerzeugende Ausformungen (2, 3) aufweisen, wobei die Blechtafeln (1) im wesentlichen gleich ausgeführt sind und die einzelnen Tafeln aufweisen:
a) in quer zur Strömungsrichtung der fluiden Medien verlaufenden Reihen angeordnete, im wesentlichen gleichen Brückausformungen (2) sowie zwischen den Brückenausformungen (2) angeordnete Rinnenausformungen (3), die so angeordnet sind, daß die Rinnenböden (4) der Rinnenausformungen (3) in einer ersten Reihe mit den Brückendecken (5) der Brückenausformungen (2) in einer zweiten Reihe in einer Ebene liegen, - undsoweiterfort reihenweise in abwechselnder Folge,
b) offene Stirnseiten (6) an den Brückenausformungen (2) sowie an den Rinnenausformungen (3),
wobei die superponierten Blechtafeln (1) in bezug auf die Brückenausformungen (2) sowie in bezug auf die Rinnenausformungen (3) in der Draufsicht deckungsgleich und/oder versetzt angeordnet sind, dadurch gekennzeichnet, daß im Vergleich zur Brückenausformungsbreite schmale Rinnenausformungen (3) ausgebildet sind, daß die superponierten Blechtafeln (1) durch ausformungsfreie Distanzblechstreifen (7) distanziert sind und daß die Breite der Distanzblechstreifen (7) in Strömungsrichtung kleiner oder gleich der Länge der Brückenausformungen (2) ist.

2. Vorrichtung nach Anspruch 1, wobei die Blechtafeln (1) zu einem ebenen Strömungsapparat zusammengefaßt sind.

3. Vorrichtung nach Anspruch 1, wobei die Blechtafeln zu Zylindern gebogen und Zylinder unterschiedlichen Durchmessers ineinandergesetzt sowie zu einem zylindrischen Strömungsapparat zusammengefaßt sind.

4. Vorrichtung nach Anspruch 1, wobei eine langgestreckte Blechtafel spiralförmig gewickelt und dadurch zu einem Spiralströmungsapparat geformt ist.

## Claims

1. A device for mixing and swirling gases and liquids, particularly as a support for the catalyst elements of motor vehicles, which is constructed from a multiplicity of superimposed sheet metal plates (1) which comprise turbulence-producing formations (2, 3), wherein the sheet metal plates (1) are of substantially identical construction and the individual plates comprise:
a) substantially identical bridge formations (2) arranged in rows running transversely to the direction of flow of the fluid media, and channel formations (3) which are disposed between the bridge formations (2) and which are arranged so that the channel bottoms (4) of the channel formations (3) in a first row lie in a plane with the bridge tops (5) of the bridge formations (2) in a second row - and so on in an alternating sequence row by row,
b) open end faces (6) on the bridge formations (2) and on the channel formations (3),
wherein the superimposed sheet metal plates (1) are disposed in plan view so that they are coincident and/or offset with respect to the bridge formations (2) and with respect to the channel formations (3), characterised in that channel formations (3) are constructed which are narrow compared with the width of the bridge formations, that the superimposed sheet metal plates (1) are spaced apart by spacer sheet metal strips (7) which are free from formations, and that the width of the spacer sheet metal strips (7) in the direction of flow is less than or equal to the length of the bridge formations (2).

2. A device according to claim 1, wherein the sheet metal plates (1) are assembled to form a flat flow apparatus.

3. A device according to claim 1, wherein the sheet metal plates are bent to form cylinders, and cylinders of different diameters are inserted in each other and are assembled to form a cylindrical flow apparatus.

4. A device according to claim 1, wherein an elongated sheet metal plate is coiled in the form of a spiral and is thereby formed into a spiral flow apparatus.

## Revendications

1. Dispositif pour mélanger et faire tourbillonner des gaz et des liquides, en particulier à titre de support des éléments de catalyseurs de véhicules automobiles, qui est composé d'une multitude de feuilles de tôle superposées (1) qui présentent des configurations (2, 3) générant de la turbulence, dans lequel les feuilles de tôle (1) sont réalisées essentiellement de manière identique et les feuilles individuelles présentent:
a) des configurations (2) en forme de pont, essentiellement identiques et disposées dans des rangées s'étendant transversalement par rapport à la direction d'écoulement des milieux fluides ainsi que des configurations (3) en forme de rigole disposées entre les configurations (2) en forme de pont, qui sont disposées de telle sorte que les fonds de rigoles (4) des configurations (3) en forme de rigole, dans une première rangée, se trouvent dans le même plan que les sommets des ponts (5) des configurations (2) en forme de pont dans une deuxième rangée, - et ainsi de suite, selon les rangées, en alternance,
b) des côtés frontaux ouverts (6) aux configurations (2) en forme de pont, ainsi qu'aux configurations (3) en forme de rigole,
les feuilles de tôle superposées (1) étant disposées, dans une vue en plan, en coïncidence et/ou en décalage par rapport aux configurations (2) en forme de pont, ainsi que par rapport aux configurations (3) en forme de rigole, caractérisé en ce que, par rapport à la largeur de la configuration en forme de pont, on réalise des configurations (3) en forme de rigole qui sont étroites, en ce que les feuilles de tôle superposées (1) sont écartées à l'aide de bandes de tôle d'écartement (7) exemptes de configurations et en ce que la largeur des bandes de tôle d'écartement (7) est inférieure ou égale à la longueur des configurations (2) en forme de pont, dans la direction d'écoulement.

2. Dispositif selon la revendication 1, dans lequel les feuilles de tôle (1) sont rassemblées pour former un appareil d'écoulement-plan.

3. Dispositif selon la revendication 1, dans lequel les feuilles de tôle sont cintrées pour former des cylindres et des cylindres de diamètres différents sont encastrés l'un dans l'autre et sont rassemblés pour former un appareil d'écoulement cylindrique.

4. Dispositif selon la revendication 1, dans lequel une feuille de tôle étirée en longueur est enroulée en spirale et façonnée de cette manière pour obtenir un appareil d'écoulement en spirale.
